Europäisches Patentamt

European Patent Office

Office européen des brevets

(11) Publication number: 0 208 313
A2

# EUROPEAN PATENT APPLICATION

(21) Application number: 86109406.8

(22) Date of filing: 09.07.86

(51) Int. Cl.⁴: C 08 L 5/00

(30) Priority: 11.07.85 JP 152640/85

(43) Date of publication of application:
14.01.87 Bulletin 87/3

(84) Designated Contracting States:
DE FR GB

(71) Applicant: MORINAGA MILK INDUSTRY CO., LTD.
33-1, Shiba 5-chome
Minato-ku, Tokyo 108(JP)

(72) Inventor: Okonogi, Shigeo
5-10-12 Chuo
Ohta-ku Tokyo(JP)

(72) Inventor: Yuguchi, Hiroya
3-33-6 Sakuragaoka
Setagaya-ku Tokyo(JP)

(72) Inventor: Miyazaki, Yusuke
Room 208 Tsukimino Village B-1 4-5 Tsukimino
Yamato-shi Kanagawa-ken(JP)

(72) Inventor: Morimoto, Keiji
13-593 Gokomutsumi
Matsudo-shi Chiba-ken(JP)

(74) Representative: Baillie, Iain Cameron et al,
c/o Ladas & Parry Isartorplatz 5
D-8000 München 2(DE)

(54) Gelling agent.

(57) A gelling agent consisting essentially of a mixture of 30 ~ 90 wt. parts of xanthan gum and 10 ~ 70 wt. parts of konjakmannan is disclosed. The gelling agent is used in an aqueous solution having pH of 3.0 ~ 12.0. A quantity of the gelling agent is usually in a range of 0.2 ~ 4.2 wt.% of the final product to be prepared. Any additive may be incorporated if necessary. Gel produced by utilizing the gelling agent has excellent hardness, elasticity, thermoreversibility and water-holding property.

EP 0 208 313 A2

SPECIFICATION

Title of the Invention      Gelling  Agent

## Background of the Invention

### 1.  Field of the Invention

The present invention relates to a novel gelling agent or component suitable for various purposes.

### 2.  Prior Art Description

Any material or component which will transform the state of existing material from sol into gel is generally referred to as a gelling agent.  Such gelling agents have been widely used for various purposes, for example, for manufacturing foods, pharmaceuticals and cosmetics, and as culture mediumn of microorganism.  Various kinds of gelling agents have been proposed, among which suitable one is selected upon demand, taking into consideration physical properties of the objective gel, e.g., pH, water-holding property, thermoreversibility and elasticity.

Konjakmannan, a kind of glucomannan, is well known as a typical one of the conventional gelling agents (Akio Sotoyama; "Shokuhin-Kako-Yo Tennenbutsu Binran", 5th edition, pages 293 and 296, published by Shokuhin-To-Kagaku-Sha, Sept.1, 1975).  Konjakmannan is gelled into Konjac (Amorphophalus Konjac C. Koch) at alkaline pH, but it forms no gelation in the neutral or acidic pH.  The gelled konjakmannan (Konjac) is never remelted to sol, and has no thermoreversibility.  Thus, application of konjakmannan has, as a gelling agent, limited and therefore can not always meet the requirements which are expected to be satisfied in various uses.

Xanthan gum is well known as a thickening agent, a stabilizer and an emulsifying agent, and its use as a gelling agent has also been known. However, no prior art suggest that a mixture of konjakmannan and xanthan gum be used as a gelling agent, especially in a specific range of mixing ratio thereof.

## Summary of the Invention

It is therefore an object of the invention to provide a novel gelling agent or component having high water-holding property, excellent elasticity and thermoreversibility.

Another object of the invention is to provide a novel gelling agent which will form a gel not only in alkaline pH but also in neutral and acidic pH.

According to the invention there is provided a gelling agent essentially consisting of xanthan gum and konjakmannan.

A preferred range of mixing ratio of xanthan gum and konjakmannan is 30 ~ 90 parts (by weight; parts and percentages are given by weight throughtout the Specification, unless otherwise specified) of xanthan gum and 10 ~ 70 parts of konjakmannan, and more preferably 40 ~ 80 parts of xanthan gum and 20 ~ 60 parts of konjakmannan.

## Detailed Description of the Invention

Xanthan gum and konjakmannan, which are the principal ingredients for the gelling component of the invention, are readily available on the market at moderate prices.

The gelling agent of the invention is manufactured by mixing 30 ~ 90 parts of xanthan gum and 10 ~ 70 parts of konjakmannan. Any suitable type of stabilizer, salt and so on may further be incorporated if necessary. These ingredients may be previously mixed and the mixture be dissolved into water, or alternatively they may be separately dissolved and dispersed into water to prepare solutions which are then mixed together.

A quantity of the gelling component of the invention to be used should be changed to meet the respective requirements but in usual case the quantity will be 0.2 ~ 4.2% of the final product.

The gelling agent of the invention may be used for various purposes, for example, for the gelation of various foods, and may be used as culture medium of plants and for imparting water-proofness to starch paste and preventing rice cakes from hardening and for cooling agent (This term is hereby defined as follows: The cooling agent is packed in pouch and cooled previously in freezer for several hours. It is then placed in adiabatic box to chill within temporary cold storage of food or is used for coooing head in the case of fever.).

The present invention will be described in more detail by means of some exemplifying tests.

Test 1

This test was carried out to examine optimum proportion in which xanthan gum and konjakmannan are mixed.

Raw materials were mixed together to prepare solutions of xanthan gum and konjakmannan. More partcularly, a mixture of the ingredients was dispersed into water to cause swelling for 10 minutes, and thereafter boiled and dissolved. Each solution of 80°C was filled up in a cup and then cooled in a refrigerator of 5°C for 5 hours for solidification.

-3-

Then, the temperature, hardness and state (appearance) of the resulted sample were measured and observed. The hardness of the resulted sample was measured in the following manner. More particularly, a conic weight (24㎜ in base diameter, 32㎜ in height and 11g in weight) of a penetrometer (Nakamura Ika-Rika Co., Ltd.) was clasped at a definite position at which the pointed end of the weight was just in contact with the gel surface, and then allowed to fall down of itself by 5-second unclasping, so that a perpendicular distance (㎜) between the gel surface and the position of the pointed end of the weight intruducing into the gel was measured. The gel hardness was defined herein as a figure corresponding to 100 times of a reciprocal of the measured distance. The results are shown in the following Table Ⅱ.

TABLE I (unit: g)

| raw material\sample No. | 1 | 2 | 3 | 4 | 5 | 6 | 7 | 8 | 9 | 10 | 11 | 12 |
|---|---|---|---|---|---|---|---|---|---|---|---|---|
| xanthan gum | 0.40 | 0.38 | 0.36 | 0.32 | 0.28 | 0.24 | 0.20 | 0.16 | 0.12 | 0.08 | 0.04 | — |
| konjakmannan | — | 0.02 | 0.04 | 0.08 | 0.12 | 0.16 | 0.20 | 0.24 | 0.28 | 0.32 | 0.36 | 0.40 |
| sugar | 15.00 | 15.00 | 15.00 | 15.00 | 15.00 | 15.00 | 15.00 | 15.00 | 15.00 | 15.00 | 15.00 | 15.00 |
| water | 84.60 | 84.60 | 84.60 | 84.60 | 84.60 | 84.60 | 84.60 | 84.60 | 84.60 | 84.60 | 84.60 | 84.60 |
| total | 100.00 | 100.00 | 100.00 | 100.00 | 100.00 | 100.00 | 100.00 | 100.00 | 100.00 | 100.00 | 100.00 | 100.00 |

TABLE II

| \sample No. | 1 | 2 | 3 | 4 | 5 | 6 | 7 | 8 | 9 | 10 | 11 | 12 |
|---|---|---|---|---|---|---|---|---|---|---|---|---|
| temperature (℃) | 6.0 | 6.5 | 7.0 | 7.0 | 7.0 | 7.0 | 7.0 | 7.0 | 6.5 | 6.5 | 6.5 | 6.5 |
| hardness of gel | — | — | 3.5 | 5.0 | 5.6 | 5.9 | 5.2 | 4.8 | 3.5 | — | — | — |
| state | sol | sol | gel | gel | gel | gel | gel | gel | gel | sol | sol | sol |

Remarks: ① The mark — in the column of hardness of gel shows the measurement being impossible, i.e., the weight fell down beyond the measurable limit (81ㄨㄨ) of the penetrometer.

② In the column of state, when the resulted sample was unmolded from the cup to lie on a dish, one retaining its cup-shape was construed to be in gel whereas one whose cup-shape was destroyed was in sol.

The results in Table Ⅱ clearly show that a composition having a proportional range of 30 ～ 90 parts of xanthan gum and 10 ～ 70 parts of konjakmannan may be effectively used as a gelling component. Especially, Samples 4 ～ 8 having composition of 40 ～ 80 parts of xanthan gum and 20 ～ 60 parts of konjakmannan form gel having satisfactory level of hardness and favorable characteristics. The results with respect to Samples 1 and 12 show that separate use of xanthan gum or konjakmannan does not form desirable gel. Combined use of xanthan gum and konjakmannan is essential when used as a gelling agent.

Test 2

This test was carried out to reveal relationship between gelation and pH of the test sample solutions.

The raw material having the same composition as that of Sample 7 in Table Ⅰ was treated in the same manner as in Test 1 to prepare test samples. To the test samples were added 5% sodium hydroxide solution or 5% hydrochloric acid solution to thereby adjust pH of the sample solutions to 1.9 ～ 12.0. According to the similar method as described in Test 1, these solutions were poured into cups, cooled and solidified so that gelling states were observed. The results are shown in the following Table Ⅲ.

Table Ⅲ

| pH | 1.9 | 2.2 | 2.4 | 2.7 | 3.0 | 3.4 | 6.2 | 8.4 | 9.0 | 9.8 | 10.5 | 11.0 | 12.0 |
|---|---|---|---|---|---|---|---|---|---|---|---|---|---|
| state | sol | sol | sol | sol | gel | gel | gel | gel | gel | gel | gel | gel | gel |

It can be concluded from the results shown in Table Ⅲ that the

gelling agent of the present invention may form a desirable gel in a wide pH range of 3.0 to 12.0. This means that the gelling agent of the present invention can be used for various purposes.

## Test 3

This test was carried out to compare water-holding property of gel obtained by using the gelling agent of the invention and the conventional ones.

Table Ⅳ  (unit: $g$)

| raw material\sample No. | 13 | 14 | 15 | 16 | 17 | 18 |
|---|---|---|---|---|---|---|
| sucrose | 15.00 | 15.00 | 15.00 | 15.00 | 15.00 | 15.00 |
| gelatin | 1.20 | — | — | — | — | — |
| carrageenan | — | 0.30 | — | — | — | — |
| agar | — | — | 0.30 | — | — | — |
| furcellaran | — | — | — | 0.60 | — | — |
| locust bean gum | — | — | — | — | 0.10 | — |
| xanthan gum | — | — | — | — | 0.30 | 0.30 |
| konjakmannan | — | — | — | — | — | 0.10 |
| water | 83.80 | 84.70 | 84.70 | 84.40 | 84.60 | 84.60 |
| total | 100.00 | 100.00 | 100.00 | 100.00 | 100.00 | 100.00 |

The raw materials used in the respective samples were all sold on the market. From these samples were prepared solutions in the same manner as in Test 1, and the solutions were filled up into cups, and cooled and solidified. After allowing them to stand in a refrigerator of 5℃ for 1 month, quantities of water separated therefrom were determined by a measuring cylinder, and the average volume was calculated from the results in each 10 samples. The average volume of separated water is shown below

in Table V.

### Table V

| sample No. | 13 | 14 | 15 | 16 | 17 | 18 |
|---|---|---|---|---|---|---|
| separated water quantity (mℓ) | 1.5 | 3.0 | 3.5 | 3.0 | 1.0 | less than 0.5 |

The volume of separated water in Sample 18, to which was added the gelling agent of the present invention, was extremely lowered in comparison with that of Samples 13 ~17 to which were added the conventional gelling composition.

Test 4

In this test thermoreversibility of the gelling agents was carried out.

The raw materials having the same composition as that of Sample 7 in Table I was treated to prepare solutions in the same manner as in Test 1. The solutions were then cooled to form gel. The resulted gel was gradually heated to 100℃ while observing the remelting states of gel states at each 10℃ interval, and then again cooled to 10℃ while observing the solidifying states of gel at each 10℃ interval. The results of the states during heating and cooling are shown in Table VI and Table VII, respectively.

### Table VI

| temperature (℃) | 10 | 20 | 30 | 40 | 50 | 60 | 70 | 80 | 90 | 100 |
|---|---|---|---|---|---|---|---|---|---|---|
| state | gel | gel | gel | gel | gel | gel | sol | sol | sol | sol |

Table VII

| temperature (°C) | 100 | 90 | 80 | 70 | 60 | 50 | 40 | 30 | 20 | 10 |
|---|---|---|---|---|---|---|---|---|---|---|
| state | sol | sol | sol | sol | sol | sol | gel | gel | gel | gel |

The results in Table VI and VII show that the gelling agent of the present invention consisting essentially of xanthan gum and konjakmannan has definite thremoreversibility.

Test 5

This test was carried out to find the quantity of the gelling agent of this invention to be incorporated.

All of raw materials shown in the following Table VIII are available on the market. Sample solutions were prepared from these raw materials in the same manner as in Test 1, then cooled and solidified. The resulted gels were subjected to the same tests as in Test 1 to observe the formation of gels in the respective cases. The results are shown in Table IX.

Table VIII

| raw material \ sample No. | 19 | 20 | 21 | 22 | 23 | 24 | 25 | 26 |
|---|---|---|---|---|---|---|---|---|
| xanthan gum | 0.05 | 0.10 | 0.20 | 0.40 | 1.00 | 2.00 | 2.50 | 3.00 |
| konjakmannan | 0.05 | 0.10 | 0.20 | 0.40 | 1.00 | 2.00 | 2.50 | 3.00 |
| water | 99.90 | 99.80 | 99.60 | 99.20 | 98.00 | 96.00 | 95.00 | 94.00 |
| total | 100.00 | 100.00 | 100.00 | 100.00 | 100.00 | 100.00 | 100.00 | 100.00 |

Table IX

| \ sample No. | 19 | 20 | 21 | 22 | 23 | 24 | 25 | 26 |
|---|---|---|---|---|---|---|---|---|
| gel formation | sol | gel | gel | gel | gel | gel | gel | gel |

As shown, it has been found that the gelling agent of this invention should be incorporated in proportion of 0.2 ～ 6.0%. However, Samples 25 and 26 to which 5% or more of the gelling agent of the invention was added were not sufficiently dissolved into water and failed to obtain gel with smoothness and softness peculiar to jelly. This means that in these samples, not all of the quantity of the gelling component incorporated would contribute to formation of gel. Thus, a preferable range of the gelling agent to be incorporated may be 0.2 ～ 4.0%.

The present invention will be further described by means of some examples thereof and some comparative tests.

Example 1

One point two kilograms (1.2kg) of powdered xanthan gum (Sanei Kagaku Co., Ltd.) and 0.8kg of konjakmannan (Shimizu Kagaku Co.,Ltd.) were thoroughly mixed to prepare approximately 2kg of a powdered gelling agent.

Example 2

Except that the quantities of xanthan gum and konjakmannan were 1.14kg and 0.86kg, respectively, a powdered gelling agent of approximately 2kg was prepared in the same manner as in Example 1.

Example 3

Except that the quantities of xanthan gum and konjakmannan were 1.6kg and 1.2kg, respectively, a powdered gelling agent of approximately 2.5kg was prepared in the same manner as in Example 1.

## Example 4

From 1*kg* of xanthan gum and 1*kg* of konjakmannan was prepared approximately 2*kg* of powdered gelling agent in substantially the same manner as in Example 1.

## Example 5

To 2*kg* of corn starch (Ouji Corn Starch Co., Ltd.) was added 0.56*kg* of the powdered gelling agent obtained in Example 3 and thoroughly mixed to prepare approximately 2.5*kg* of powdered starch material.

## Example 6

A mixture having the composition shown in Table X was dispersed into water and swelled for 10 minutes. Then, the solution was heated at 100°C for 10 minutes for sterilization, and thereafter cooled to 80°C. The solution was poured into a cup and cooled in a refrigerator of 5°C for 4 hours. An arrowroot starch cake containing glutinous flour thus prepared had excellent elasticity and mouthfeel.

### Table X

| raw material | composition (*kg*) |
|---|---|
| sugar | 10.00 |
| arrowroot starch | 2.00 |
| glutinous rice flour | 1.00 |
| gelling agent of Example 1 | 0.50 |
| flavoring agent | 0.10 |
| coloring agent | 0.05 |
| water | 86.35 |
| total | 100.00 |

Example 7

Five parts of the gelling agent of Example 1 was dispersed into 995 parts of water and swelled for 10 minutes, and then boiled to be dissolved into water. The solution was poured, in 5㎜ depth, into a tray of 20c㎜ in depth, and cooled and solidified in a refrigerator. The surface of gel produced was sowed with seed of Kaiware-Daikon (Japanese radish) and allowed to stand in a darkroom of 25°C for 5 days to be germinated and grawn. After growing, it was placed outdoors for 1 day to be exposed to sunlight, and then harvested. The Kaiware-Daikon had been grown up rapidly without watering during the period from the sowing to the harvest.

Comparative Test 1

Table XI (unit: $g$)

| raw material \ sample No. | 27 | 28 | 29 | 30 |
|---|---|---|---|---|
| gelling agent of Example 2 | 0.70 | — | 0.35 | — |
| product of Example 5 | — | 2.56 | — | — |
| corn starch | — | — | 5.00 | 10.00 |
| water | 99.30 | 97.44 | 94.65 | 90.00 |

note: Corn starch was the same raw material as used in Example 5.

The raw materials having the composition shown above in Table XI were dispersed into water, and then boiled and dissolved. The solution was boiled for 10 minutes and then cooled to 25°C to prepare glue. The sample glue thus prepared and starch paste on the market (Sample 31) were subjected to test for adhesive strength in the following manner.

Thus, two sheets of paper in 0.09㎜ thickness were prepared. To an area of 15㎜ width from the end of one sheet was plastered with the sample glue in a quantity of 0.1$g$/c㎡ and then the other sheet was superposed thereon while exerting pressure of $1kg/cm^2$ for 10 seconds. After drying indoors for 1 hour, the superposed paper sheets thus bonded together were cut out in a direction perpendicular to the bonded portion, to prepare 15mm wide test samples. To one group of the test samples were applied external force in a shear direction by means of a tensile test machine (Toyo Seiki Co., Ltd.) to measure stress of the samples. The other group of the test samples was dipped into water for 24 hours to compare water proofness of glue or paste. Further, glue was applied to a glass sheet to form a 3mm thick coating, and then allowed to stand for 24 hours to compare water-holding property of the glue. The results of these comparative tests are shown in the following Table XII.

Table XII

| sample No.<br>subject of comparison | 27 | 28 | 29 | 30 | 31 |
|---|---|---|---|---|---|
| comparison of adhesiveness<br>(each 5 samples) | all 5 samples bearable to<br>external force more than 5kg (*) | ← | ← | ← | ← |
| comparison of water proofness<br>(each 10 samples) | all 10 samples show no peeling<br>off at the portions of adhesion | ← | ← | the portions of adhesion of<br>all 10 samples peeled of | ← |
| comparison of water-holding<br>property (each 5 samples) | all 5 samples suitable for glue | ← | ← | all 5 samples being dried up,<br>showing unsuitability for glue | ← |

Notes: (*) Papers were broken off at a portion other than that of adhesion, when applied to 5kg external force.
The arrow ← shows the same result as in the left column.

As shown, gel formed by using the gelling agent comprising a mixture of konjakmannan and xanthan gum is usable as glue and its adhesive strength is sufficient. Moreover, by incorporating the gelling agent of the invention water proofness and water-holding property of the starch glue may be remarkably improved.

Example 8

Cooling agents were prepared from 20g of the gelling agent prepared in Example 4, 200g of glycerol on the market and 780g of water (Sample 32) and from 20g of the same gelling agent, 150g of sodium chloride on the market and 830g of water (Sample 33). More particularly, the mixtures were heated to 100℃ and allowed to stand at the same temperature for 10 minutes. Each 200g of the solution was then poured into a pouch (Toyo Seikan Co., Ltd.) and then the pouch was heat-sealed. Thus, each five products were obtained.

Comparative Test 2

The cooling agents having different composition, obtained in Example 8, and another cooling agent (Sample 34) made by Esuren Kako Co., Ltd. were put into tests for cooling effect, hardness of the cooling agent and syneresis.

Into a box (200㎜×175㎜×135㎜, 13㎜ thickness) made by foamed styrol were put two pieces of cooling agent (400g) which had been cooled in a freezer of −20℃ for 10 hours, and cooling effect was observed by measuring the temperature change inside the box. Meanwhile, the cooling agents were placed in freezers of −13℃ and −20℃ for 10 hours, respectively, and thereafter hardness of the cooling agents was observed. More-

-15-

over, hardness and syneresis were observed after the cooling agents had been defrosted.  The results of these comparative tests are shown in Table XII.

Table XII

| test \ sample No. | 32 | 33 | 34 |
|---|---|---|---|
| comparison of cooling effect | | | |
|   initial temp. | 26.4℃ | 26.4℃ | 26.4℃ |
|   temp. after 5 min. | 14.5 | 14.0 | 14.0 |
|   temp. after 10 min. | 14.8 | 14.2 | 14.5 |
|   temp. after 20 min. | 15.2 | 14.5 | 15.0 |
|   temp. after 30 min. | 15.5 | 15.0 | 15.2 |
|   temp. after 40 min. | 16.0 | 15.5 | 15.5 |
|   temp. after 50 min. | 16.2 | 16.0 | 15.8 |
|   temp. after 60 min. | 16.5 | 16.5 | 16.0 |
|   temp. after 80 min. | 16.8 | 16.8 | 16.2 |
|   temp. after 100 min. | 17.0 | 17.0 | 16.5 |
|   temp. after 120 min. | 17.2 | 17.2 | 16.8 |
| comparison of hardness & syneresis | | | |
|   −15℃ in frozen state | soft | soft | hard |
|     after defrosting | soft<br>no syneresis | soft<br>no syneresis | soft<br>no suneresis |
|   −20℃ in frozen state | soft | soft | hard |
|     after defrosting | soft<br>no syneresis | soft<br>no syneresis | soft<br>no syneresis |

As shown, the cooling effect of Samples 32 and 33 are comparable with that of the marketed cooling agent (Sample 34) and show no syneresis after defrost. Moreover, these cooling agents Nos. 32 and 33 have an outstanding characteristic that they are not hardened even in frozen state and are flexible in the shape. These characteristics are not recognized in the conventional cooling agents.

## Example 9

A mixture of 8g of the gelling agent in Example 4 and 600g of glutinous rice flour was added to 382g water and the mixture was kneaded in a known manner. The kneaded mass was divided into dumplings each of 40g, which were heated in boiled water for 10 minutes, to prepare glutinous rice flour dumplings.

## Comparative Test 3

A comparative test for hardness of the glutinous rice flour dumplings after preservation in refrigerated states was carried out, with respect to Sample 35, that is a sample of the present invention prepared in Example 9, and Sample 36 which was prepared in the same manner as in Example 9 except that the raw material was a mixture of 600g glutinous rice flour and 400g water, not containing the gelling agent of the invention.

More particularly, after the respective samples had been refrigerated in a refrigerator of 5°C for 1 week the hardness thereof was measured. Sample 35 remains soft but Sample 36 was hardened. These results show that it is possible to prevent the glutinous rice flour dumplings from hardening and to have prolonged period of shelf life by using the gelling agent of this invention in the usual method of producing glutinous rice flour dumplings.

Although this invention has been described in conjunction with some examples thereof, some exemplifing tests and some comparative tests, it is to be noted that many variations and applications thereof may be made without departing from the spirits and scopes of the invention as defined in the appended claims.

What we claim is:

1.     A gelling agent, which has a thermoreversible gel-forming ability and a gel-forming ability in a wide pH range of 3.0 to 12.0, and has properties of high water-holding ability of the resulted gel state and of causing substantially no syneresis in the gel, consisting essentially of xanthan gum and konjakmannan.

2.     The gelling agent as claimed in Claim 1, having composition of 30 ~ 90 weight parts of xanthan gum and 10 ~ 70 weight parts of konjakmannan.

3.     The gelling agent as claimed in Claim 1, having composition of 40 ~ 80 weight parts of xanthan gum and 20 ~ 60 weight parts of konjakmannan.